# EUROPEAN PATENT SPECIFICATION

(11) **EP 2 272 160 B1**
(45) Date of publication and mention of the grant of the patent: **08.05.2019**
(21) Application number: 09724669.8
(22) Date of filing: 27.03.2009
(51) Int. Cl.: H02M 7/217, H02M 1/00

(54) **LINEAR REGULATOR WITH ZERO CROSSING COORDINATION**
LINEARREGLER MIT NULLDURCHGANGSKOORDINATION
RÉGULATEUR LINÉAIRE AVEC COORDINATION DE PASSAGE PAR ZÉRO

(30) Priority: 28.03.2008 GB 0805692
(43) Date of publication of application: 12.01.2011
(73) Proprietor: Eaton Industries Manufacturing GmbH, 1110 Morges (CH)
(72) Inventor: JACKSON, Jonathan Keith, Oban PA34 4TB (GB); WILLIAMS, Andrew, Conwy Gwynedd LL30 1HQ (GB)
(74) Representative: Hoarton, Lloyd Douglas Charles
(86) International application number: PCT/GB2009/000820
(87) International publication number: WO 2009/118535

(56) References cited:
- EP-A- 1 148 614
- US-A- 3 323 034
- US-A- 3 373 344
- US-A- 5 998 977

## Description

The present invention relates to power regulators, in particular, but not exclusively, for use in power supplies for circuit protection applications.

The prior art includes a number of circuit designs for providing relatively low output voltage and current for an AC input voltage of e.g. 240Vrms.

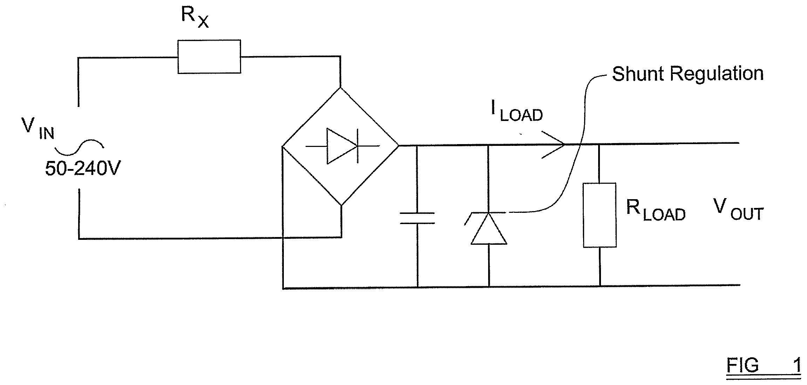

A first example of such prior art is given in Fig. 1, which shows a resistive dropper. The resistive dropper includes a first resistive element, Rx, and a load resistance R_{LOAD.} The ratio of Rx and R_{LOAD} can be adjusted such that at minimum input voltage Vin, the output voltage, Vout, is at a desired level at maximum continuous I_{LOAD} without a shunt (e.g. the diode shown in the figure) becoming active. However, at maximum Vin, the shunt can act to sink currents in excess of the load current. For the AC voltage range of 50V to 280V this could be as much as four times the load current, for example. Dissipation in Rx can be correspondingly higher. Therefore, a problem with this type of device is that it is prone to high power wastage.

Furthermore, the start-up and reaction times of such a circuit are relatively slow, which can be problematic in circuit protection devices which require fast start-up and reaction to a high current demand, for example. Indeed in some countries there is a regulatory requirement to isolate the supply from the load in <40ms if a residual current in excess of 5x the rated threshold is detected. Assuming the trip device for the isolation mechanism is line powered then the maximum time for isolating the supply once the trip decision has been made can be around 10ms, therefore leaving 30ms for startup and detection of the fault.

In a situation where the supply is originally turned on as the line voltage just falls below the minimum operating voltage then a further 6-7ms could be lost until the line voltage is sufficient to start the PSU. So the actual available time for PSU startup and fault detection could be around 22ms. Considering a shunt regulator operating at the lower end of its voltage range then it is likely that several cycles of supply voltage would be required to charge the output capacitor to make the power supply stable.

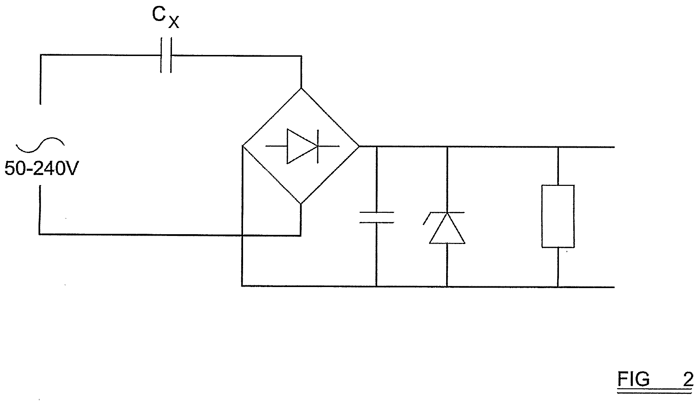

An alternative example of a prior art circuit is given in Fig. 2, which shows a reactive dropper. A reactive dropper suffers from similar problems to that described above for the resistive dropper example. However, the capacitor Cx of a reactive dropper is required to provide a large capacitance and therefore it is also physically large, which is problematic for applications where small physical size is an important factor.

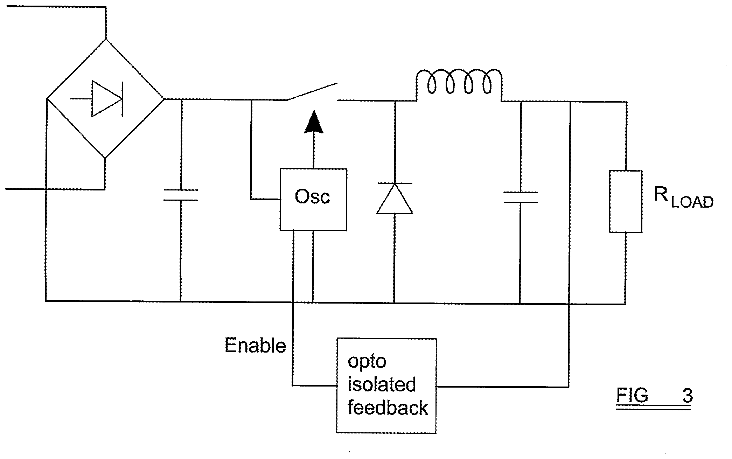

Fig. 3 shows a Buck converter which is another example of a prior art circuit. However, the circuitry in a Buck converter is often complex and tends to be expensive, which can be undesirable for certain applications. Indeed, similar to the reactive dropper above, some of the components in a Buck converter can also be physically large, which again can be undesirable.

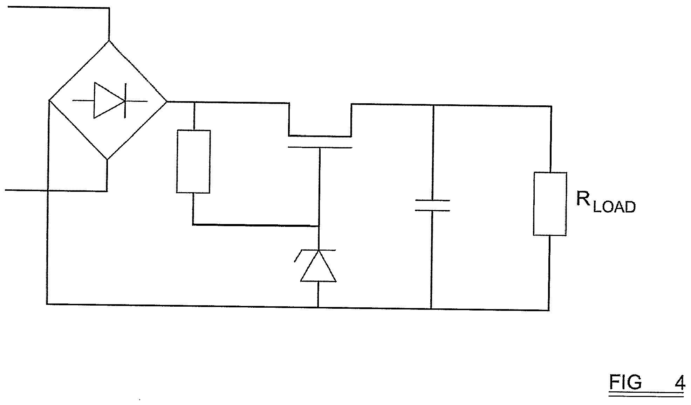

A standard linear regulator circuit as shown in Fig. 4, can be implemented relatively cheaply, but a problem with such circuits is similar to that described above in relation to resistive and reactive droppers in that at higher input voltages, e.g. input voltages approaching 240V AC, there is large power dissipation within the circuit leading to power wastage and undesirable heating of the circuit.

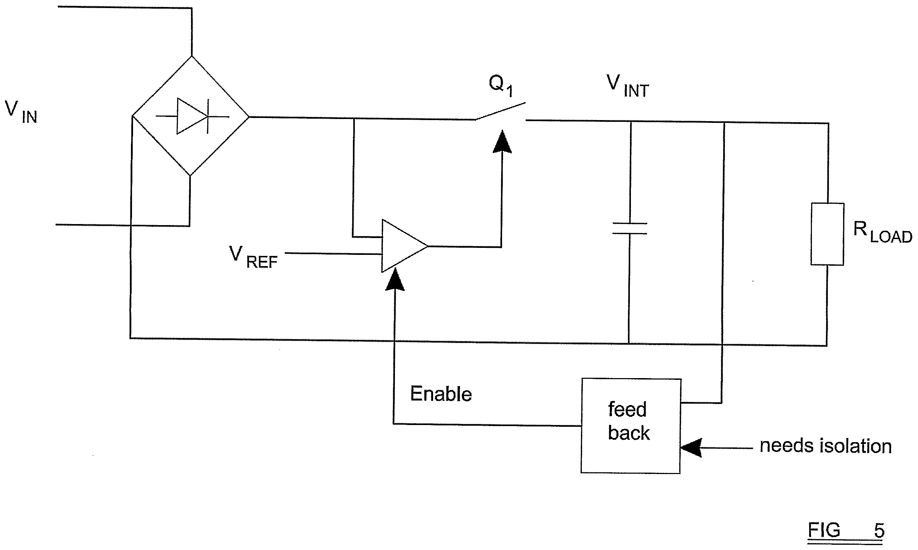

In Fig. 5 a further prior art circuit is shown, which is known as a zero cross switch. In this circuit, an FET (Field Effect Transistor) Q1 is provided, and is controlled to switch off the current flow when Vin exceeds a pre-determined threshold, e.g. 40V. In this circuit, therefore, the regulation itself is performed simply by switching the output on and off, thus leading to high ripple at V_{INT}. Accordingly, further regulation is often necessary to smooth V_{INT} before supplying it to R_{LOAD}. Furthermore, this circuit is severely limited in response time to transient high loads. In particular, it can take a long time to charge up the capacitor at the output of the zero cross switching element, e.g. Q1, which leads to a delay in supplying current to the load. Generally, as discussed above, it is desirable for the supply to begin before the end of 40ms of the circuit being switched on.

Another potentially problematic issue with such zero crossing arrangements is the effect on the line supply of other devices simultaneously drawing large currents at the zero cross, especially when a large installation of circuit breakers are turned on simultaneously. In the inventor's experience this can cause a potential EMC issue and it may be a sufficiently serious problem to affect the electrical supply from the transformer in a sub-station of the electrical grid.

US3323034 discloses a power regulator comprising a full-wave rectifier for supplying a rectified AC signal to a switching means including first and second switching elements, and a linear regulator having an input connected to the output of the switching means, the first switching element including a transistor with a base being supplied with the rectified AC signal and the second switching element providing a current bypass to the first switching element and the linear regulator.

US3373344 discloses a voltage regulator circuit including a storage capacitor and a switching means responsive to a voltage difference for charging the capacitor. US5998977 discloses start-up modes for operating a boost type switching power supply. EP1148614 discloses a battery operated power circuit and driving method thereof.

The present invention is made in view of the problems and disadvantages set out above in relation to the prior art.

The present invention provides a power regulator as claimed.

Therefore, in a first mode of operation, e.g. a "normal" mode of operation, a circuit according to the present invention can act as a power switching circuit; but, in a second mode of operation, e.g. when a low input voltage is provided or when a heavy load is applied (e.g. at start up), a circuit according to the present invention can act as a linear regulator. The present invention therefore provides an adaptive power supply which can act as a power switching supply or a linear regulator depending on its operating conditions. Thus, the problems
and disadvantages outlined above with respect to the prior art can be overcome.

In particular, the present invention aims to provide a power regulator for use in circuit protection applications to provide a start up time which is quicker than in the prior art examples above, for example the present invention can provide full regulation in under 5ms, even in under 3ms.

According to the present invention, a power regulator can be provided which requires only components of small size, which is advantageous for applications such as consumer electronics where small size is desirable.

Advantageously, the present invention provides a circuit which dissipates only about one third the power of a standard linear regulator, thereby avoiding power waste and unnecessary circuit heating.

A power regulator according to the present invention can also operate over a wide range of input voltages whilst maintaining a desired output, e.g. a low voltage and/or current output. The present invention being compatible with mains voltage supply, e.g. less than 50V AC, and greater than 250V AC, and even with 3 phase 50V to 690V voltage supplies.

The first signal may be a substantially DC signal.

Preferably, when said second difference is less than said predetermined amount, the second switching element does not operate to provide said current bypass, and the first switching element is able to limit the current flow through the linear regulator, and therefore the power regulator can act as a power switching power supply.

Preferably, when the voltage value at the output of the switching means is equal to or less than the second reference voltage value by more than said predetermined amount, the second switching element operates to provide a current bypass to the first switching element, and therefore the power regulator can act as a linear regulator.

Preferably, when the second switch is in operation, the second switching element provides a current bypass to the current limiting first switching element, thereby overriding the limit set by the current limiting first switching element and allowing more current to flow through said linear regulator.

Preferably, the second switch includes a Zener diode, arranged to operate as said bypass when said predetermined amount is equal to or greater than the reverse breakdown voltage of the Zener diode, therefore allowing a power regulator according to the present invention to provide a circuit in which the power switching element of the circuit is bypassable to provide an operation similar to a linear regulator e.g. at high load (e.g. at start-up) and/or low voltage inputs.

The second reference voltage value may be derived from the first signal.

The first switching element may include a Darlington pair. The base of the Darlington pair may be arranged to be supplied with the rectified AC signal.

The output of the switching means may be connected to a further regulator, for example a linear regulator and/or a Buck converter.

The power regulator may be included in an integrated circuit. The power regulator may be included in a circuit protection device.

Aspects and embodiments of the present invention will now be illustrated, by way of example, with reference to the accompanying figures. Further aspects and embodiments will be apparent to those skilled in the art.

In the accompanying figures:
Figs. 1 to 5 show examples of prior art circuits;
Fig. 6 shows a generalized schematic of a circuit according to the present invention;
Fig. 7 shows a preferred embodiment of the present invention;
Fig. 8 shows traces for the voltages and currents associated with a linear regulator which forms a part of an embodiment of the present invention;
Fig. 9 shows outputs for various input voltages for an embodiment of the present invention;
Fig. 10 shows a plot of power against time for a power regulator according to the present invention in which the regulator is operating in switching mode rather than in linear mode;
Fig. 11 shows a plot of power against time achievable by the present invention.

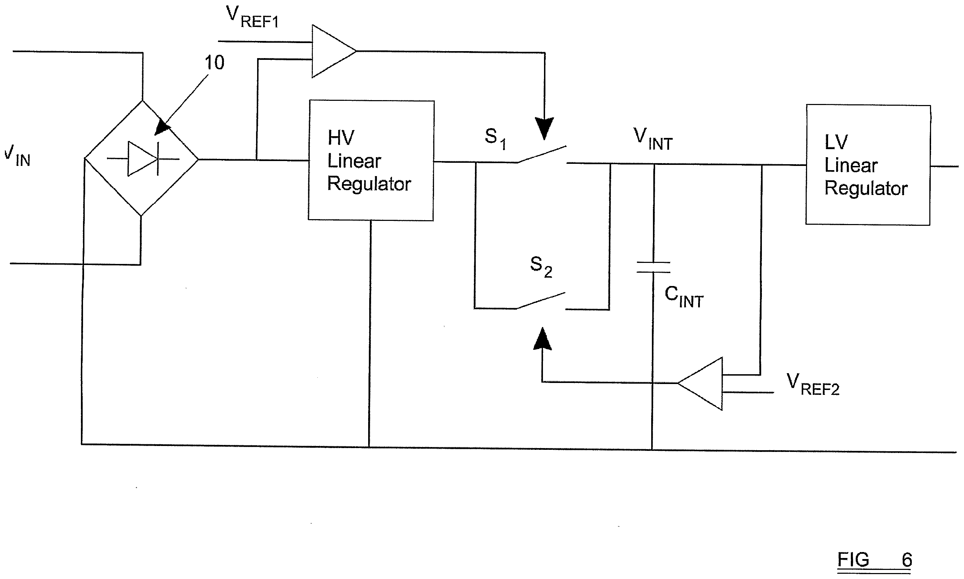

Fig. 6 shows a generalized schematic of a circuit according to the present invention, in which a switch S1 is controllable to allow or prevent current to flow through a first linear regulator, which may be a high voltage (HV) linear regulator to the output of the circuit, and in which a switch S2 is controllable to allow current to bypass the switch S1 to the output of the circuit.

The switch S1 is controllable on the basis of a difference between the input to the (HV) linear regulator and a first reference voltage V_{REF1.} The switch S2 is controllable on the basis of a difference between the output of the circuit and a second reference voltage V_{REF2.}

The LV linear regulator shown in the figure to be fed by the output of the circuit is an optional further regulating stage to further smooth the output of the circuit if deemed necessary.

The input to the (HV) linear regulator is connected to a rectifier 10 which could be a half wave rectifier but which is preferably a full wave rectifier. The input Vin to the rectifier is preferably within the range 50 to 240 V AC, for example the mains voltage used in the UK and Continental Europe. But, the input Vin to the rectifier could be within the range 50V to 690V AC e.g. from a three phase supply. The input to Vin could be even higher than this.

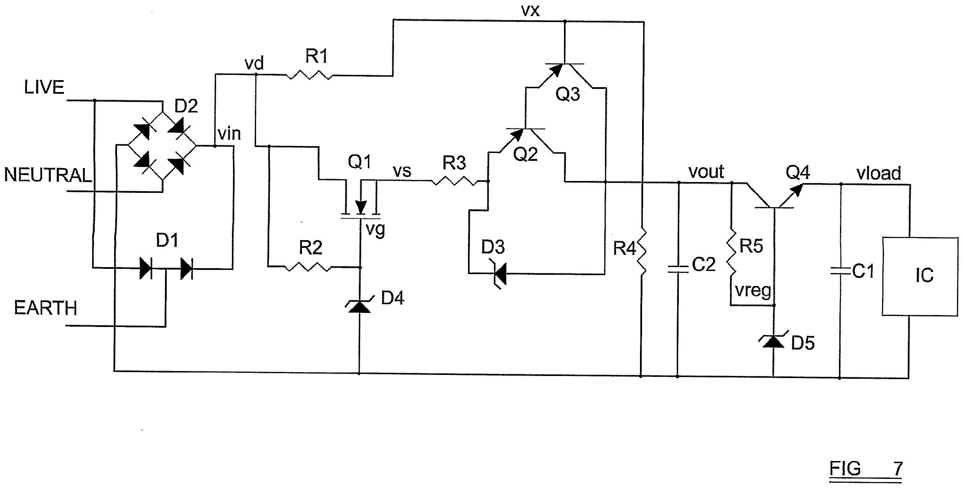

Fig. 7 shows a preferred arrangement of a power regulator according to the present invention.

The power regulator includes a rectifier D2 for rectifying an AC voltage input, together with an optional extra half bridge D1 to allow for powering to earth in the case of neutral being lost.

A transistor Q1 (which could be a MOSFET n channel enhancement device although other types could be utilized) is provided, followed by current limiting resistor R3 and a smoothing capacitor C2.

The control terminal of the transistor Q1 (the gate connected to node *vg* in this case) is preferably connected to a Zener diode regulator (R2, D4) to fix the gate voltage. This arrangement forms a basic linear regulator such that if voltage *vs* is lower than *vg* then the transistor Q1 tends to switch on thereby increasing *vs* until it exceeds *vg* whereby the transistor Q1 turns off thereby reducing *vs*. Note that at normal loads *vg* is almost equal to *vout.*

In practice the transistor Q1 will settle at some point whereby it is sufficiently conducting to maintain *vs* at the desired value rather than actually turning on and off. Since there is a requirement for *vg* to be higher by some small voltage than *vs* to turn the transistor Q1 on, the device actually regulates *vs* to be slightly below *vg* by a constant offset value.

At start up, or for example when heavy current is required, *vs* and *vout* will be at zero causing the transistor Q1 to turn hard on allowing large currents to flow which could have the ability to damage the transistor. However, in this event a large current produces a voltage across R3 which tends to raise *vs* thus tending to turn the transistor Q1 off thereby limiting the current. Under normal conditions the output of the linear regulator comprising Q1, R2 and D4 is a stable DC voltage slightly below *vg.*

The input to this circuit can be AC over a wide range rather than fixed DC. This raises two points. Firstly, the whole regulator shuts down twice every mains cycle as the voltage approaches zero. This means *vg* and *vd* drop to zero leaving the transistor turned off briefly. This leaves C2 to supply the load but this produces some ripple in the voltage *vout.* Secondly, the input voltage is a constant changing with a wide range of peak amplitude. However, since the regulation is dependent on the difference between *vg* and *vs* this means the circuit maintains regulation.

In contrast, a reactive dropper cannot achieve regulation for different peak values, it can only be built to work in the worst case and dumps energy in normal conditions. For example, for operation at a relatively low working voltage, say 50V, which can be considered to be the best case, the reactive dropper is designed to achieve regulation at this voltage. At any other greater voltage, the excess current is shunted by the diode and is simply wasted. Looking at a working voltage of 240V, which can be considered the worst case, only a small portion of the regulated current is used to power the load circuit whilst the rest is dissipated as heat in the shunt diode.

Also, because the output current rises if *vout* is too low this enables quick start up and response to sudden heavy loads by this supply. Again, a reactive dropper is normally built for a worst case requiring large components and will need to dump energy in normal operation.

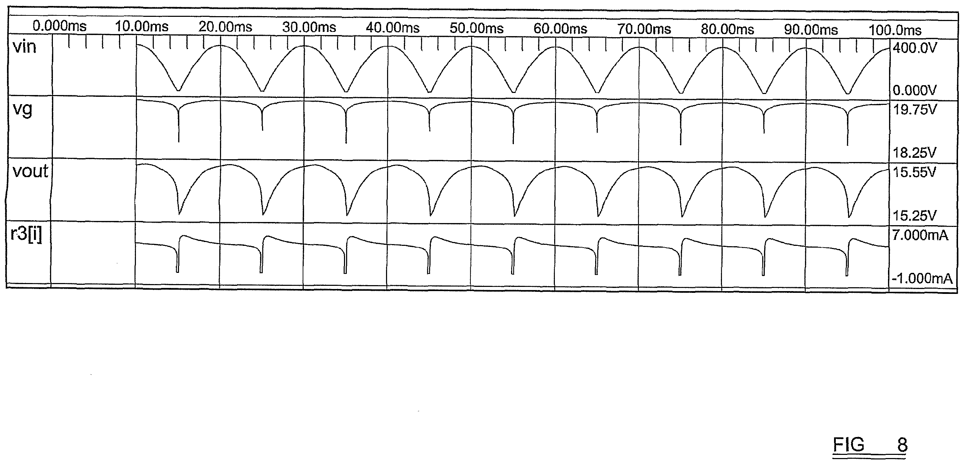

Waveforms for typical operation of the linear regulator comprising Q1, R2 and D4 are shown in Fig. 8. Voltage *Vin* is the rectified mains input and *vg* is the control voltage showing dips each time the mains reaches effective zero (it does not actually reach true zero due to parasitic capacitance(s)). The value of *vout* is shown (note the large DC offset on scale) to be fairly stable but with some ripple. The current through the transistor is shown in the bottom trace (r3[i]). This exhibits zeros as the mains dips but is otherwise a fairly constant value. However, after a pause when mains dips, the output will be a little too low due to charge loss on capacitor C2 so slightly more current is provided initially in the half cycle to make this up, hence the sloping plateau.

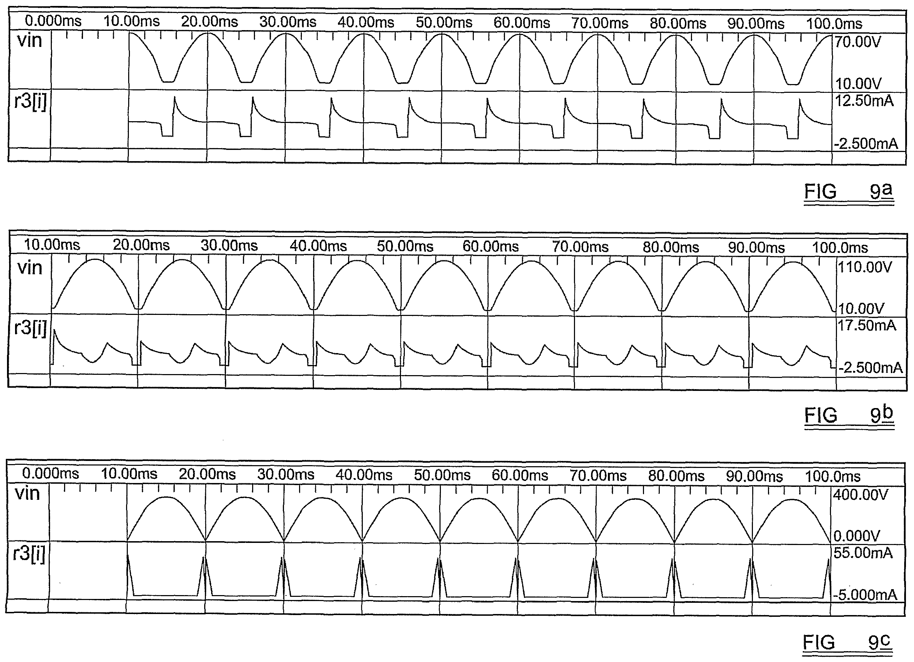

At start-up, or when there is a heavy load, the waveforms are as shown in Fig. 9, and the circuit controls the current to be high at least initially to ensure rapid start-up of the supply. However, the maximum current is limited by R3 to ensure no damage occurs to the transistor.

Furthermore, if the ripple on the output is significant or the quality of regulation is not tolerable a second linear regulator can optionally be used to drop *vout* to a slightly lower voltage for use by the IC. This is optional and the components R5, C1, D5 and Q4 operate in a similar fashion to the first basic linear regulator stage (which includes Q1, R2 and D4). Very little power is dissipated in this second regulator and other types of regulation are possible (such as Buck convertors, linear regulators etc.) except a shunt regulator which would cause excessive dissipation in the first stage.

Since the power in the circuit protection device is given by P=V*I then if I is constant most power produced is at peak voltage. To reduce overall power it is possible to reduce the current at peak voltage and increase it at lower voltage parts of the waveform. In the present invention, the regulation is governed by the average current level and the period of conduction is governed by the input (e.g. the mains) voltage waveform. Therefore, at low voltages dissipation in the circuit is low. At high mains voltage then dissipation can be reduced by reducing or even completely turning off the current at the peaks.

The components involved in the mechanism for reducing dissipation are R1, R4, Q2 and Q3 shown in Fig. 7.

Q2 and Q3 are combined as a Darlington pair to produce a single transistor with high current gain (i.e. the ratio of collector to base current is large). For low mains voltage the emitter-base voltage of the transistors is forward biased and the base will be at approximately *vs* or a little below so a predictable current will flow from the base and mainly down through R4.

This base current is much higher than that needed to support the likely collector current of the transistor Q1, meaning Q2 and Q3 are fully switched on in one mode of operation and therefore have little effect on the rest of the circuit.

However, as the mains voltage rises, a significant current through R1 begins to rise. Since the base voltage is always around *vs* then this extra current must flow through R4 in place of the base current which is therefore reduced.

Since base current is reduced then the collector current supported is also reduced in proportion. So, as the mains voltage rises there becomes a point where the collector current that can be supported becomes less than that already flowing, so the output supply is effectively current limited by the Darlington pair. The resulting waveforms for various amplitudes of mains supply are shown in Fig. 9a for 50Vrms input. Since there is little dissipation no modification to normal linear regulation is required and so the current waveform is as expected.

The graphs of Fig. 9b shows operation for 75Vrms input and it can be seen that at voltage peaks the current is limited. This causes the unlimited sections of the current waveform to increase such that average current is unaltered.

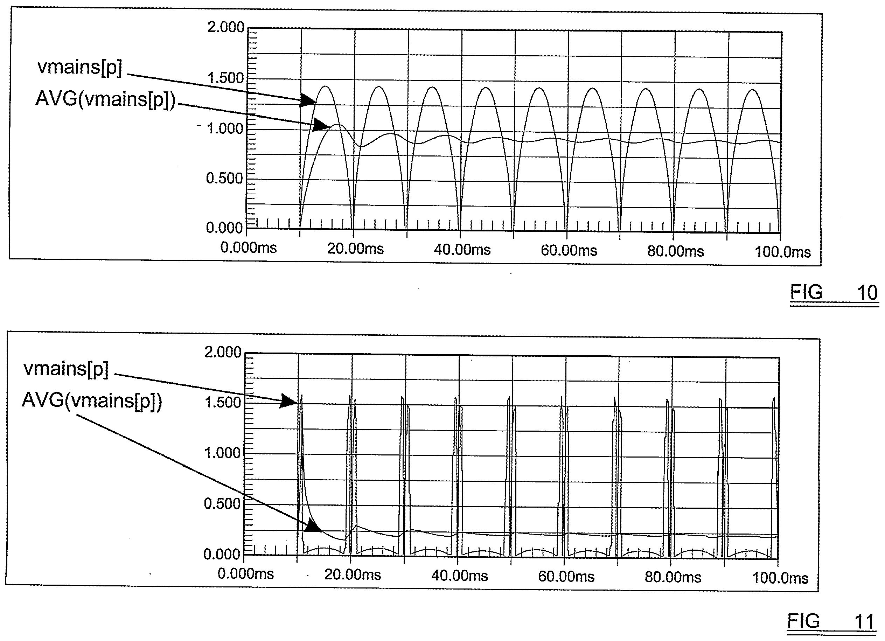

With 240Vrms now applied as shown in Fig. 9c, the current is completely off for most of the waveform and only comes on for a short duration. The resulting power saving is apparent from Figs. 10 and 11.

Fig. 10 shows the operation with no power saving mechanism. Fig. 11 shows the power dissipation in the linear regulator and shows instantaneous power drawn from the mains along with an average which hovers around 0.9W.

Importantly, a zener diode D3 is provided, which allows the power saving mechanism to be bypassed. This conduction path is only used if *vout* is much lower than normal (i.e. at start-up or when a heavy load is suddenly required and drains C1). However, under usual operation *vout* does not drop low enough to enable this path to conduct.

The Zener diode D3 provides a means of bypassing the Darlington pair when it is acting as a current limiter, so as to allow maximum available current to flow during short periods of high demand, such as at start-up. The bypass element is preferably a Zener diode, but it may consist of any element having a variable impedance which is sensitive to the voltage across the current limiter embodied here as a Darlington pair. If the voltage difference across the current limiter is equal to or more than a predetermined threshold it indicates insufficient current is being supplied to the load and so the bypass element will switch from a high to a low impedance state to allow more current to flow to the load to compensate for the deficit. The bypass element can return to high impedance once "normal" demand from the supply resumes, e.g. if the voltage difference across the current limiter returns to be less than a predetermined threshold.

Advantageously, the circuit does not need a smoothing capacitor after rectification which is found in most other types of supply. This is a significant saving on space and cost since this component is usually a moderately large value component with a high voltage rating.

The foregoing description of the preferred embodiments of the invention have been presented for purposes of illustration and description, it is not intended to be exhaustive or to limit the invention to the precise form disclosed, and modifications and variations are possible in light of the above teachings.

It is intended that the scope of the invention be defined by the claims appended hereto.

## Claims

1. A power regulator having
a full-wave rectifier (D2) for supplying a rectified AC signal (vin);
a linear regulator (Q1, D4, R2) having an input (vd) connected to the full-wave rectifier, the linear regulator being configured for outputting a first signal (vs) derived from the rectified AC signal; and
a switching means (Q2, D3) having an input connected to the output (vs) of the linear regulator and having an output (vout), the switching means (Q2, D3) including first and second switching elements (Q2, Q3; D3) each respectively connected between the input and output of the switching means,
the operation of the first switching element (Q2, Q3) being determined by a first difference between a voltage value associated with the rectified AC signal (vin) and a first reference voltage value, and
the operation of the second switching element (D3) being determined by a second difference between the voltage value at the output (vout) of the switching means and a second reference voltage value; wherein
when said second difference is equal to or greater than a predetermined amount, the second switching element (D3) operates to provide a current bypass to the first switching element (Q2, Q3),
wherein the first switching element (Q2, Q3) includes a transistor (Q3) and the base of the transistor is arranged to be supplied with the rectified AC signal (vin).

2. The power regulator according to claim 1, wherein when said second difference is less than said predetermined amount, the second switching element (D3) does not operate to provide said current bypass, and the first switching element (Q2, Q3) is able to limit the current flow through the linear regulator (Q1, D4, R2).

3. The power regulator according to claim 1 or 2, wherein when the voltage value at the output of the switching means is equal to or less than the second reference voltage value by more than said predetermined amount, the second switching element (D3) operates to provide a current bypass to the first switching element (Q2, Q3).

4. The power regulator according to claim 3, wherein when the second switching element (D3) is in operation, the second switching element (D3) provides a current bypass to the current limiting first switching element (Q2, Q3), thereby overriding the limit set by the current limiting first switching element (Q2, Q3) and allowing more current to flow through said linear regulator (Q1, D4, R2).

5. The power regulator according to any one of claims 1 to 4, wherein the second switching element (D3) includes a Zener diode, arranged to operate as said bypass when said predetermined amount is equal to or greater than the reverse breakdown voltage of the Zener diode.

6. The power regulator according to any one of the preceding claims, wherein the first switching element (Q2, Q3) includes a Darlington pair.

7. The power regulator according to claim 6, wherein the base of the Darlington pair is arranged to be supplied with the rectified AC signal (vin).

8. The power regulator according to any preceding claim, wherein the base is arranged to be supplied with the rectified AC signal (vin) from a potential divider.

9. The power regulator according to any one of the preceding claims, wherein:
the power regulator further includes a smoothing capacitor connected to the output (vout) of the switching means; and/or
the second reference voltage value is derived from the first signal (vs).

10. The power regulator according to any one of the preceding claims, wherein the output of the switching means (Q2, D3) is connected to a Buck converter.

11. The power regulator according to any one of the preceding claims, wherein the output of the switching means (Q2, D3) is connected to a further linear regulator.

12. A circuit protection device including a power regulator according to any one of the preceding claims.

13. An integrated circuit having a power regulator according to any one of the preceding claims.

## Patentansprüche

1. Stromregler mit
einem Vollwellen-Gleichrichter (D2) zur Lieferung eines gleichgerichteten Wechselstromsignals (vin);
einem Linearregler (Q1, D4, R2) mit einem Eingang (vd), der mit dem Vollwellen-Gleichrichter verbunden ist, wobei der Lineargleichrichter zum Ausgeben eines ersten Signals (vs) konfiguriert ist, das vom gleichgerichteten Wechselstromsignal abgeleitet ist; und
einem Schaltmittel (Q2, D3) mit einem Eingang, der mit dem Ausgang (vs) des Linearreglers verbunden ist und einen Ausgang (vout) aufweist, wobei das Schaltmittel (Q2, D3) erste und zweite Schaltelemente (Q2, Q3; D3) einschließt, die jeweils zwischen dem Eingang und Ausgang der Schaltelemente angeschlossen sind,
wobei der Betrieb des ersten Schaltelements (Q2, Q3) durch eine erste Differenz zwischen einem Spannungswert, der mit dem gleichgerichteten Wechselstromsignal (vin) assoziiert ist, und einem ersten Referenzspannungswert bestimmt wird, und
wobei der Betrieb des zweiten Schaltelements (D3) durch eine zweite Differenz zwischen dem Spannungswert am Ausgang (vout) des Schaltelements und eines zweiten Referenzspannungswerts bestimmt wird; wobei,
wenn die zweite Differenz gleich oder größer als ein vorbestimmter Betrag ist, das zweite Schaltelement (D3) arbeitet, um einen Strom-Bypass zum ersten Schaltelement (Q2, Q3) bereitzustellen, wobei das erste Schaltelement (Q2, Q3) einen Transistor (Q3) einschließt und die Basis des Transistors eingerichtet ist, mit dem gleichgerichteten Wechselstromsignal (vin) versorgt zu werden.

2. Stromregler nach Anspruch 1, wobei, wenn die zweite Differenz geringer als der vorbestimmte Betrag ist, das zweite Schaltelement (D3) nicht arbeitet, um den Strom-Bypass bereitzustellen, und das erste Schaltelement (Q2, Q3) fähig ist, den Stromfluss durch den Linearregler (Q1, D4, R2) zu begrenzen.

3. Stromregler nach Anspruch 1 oder 2, wobei, wenn der Spannungswert am Ausgang des Schaltelements gleich oder geringer als der zweite Referenzspannungswert um mehr als der vorbestimmte Betrag ist, arbeitet das zweite Schaltelement (D3), um dem ersten Schaltelement (Q2, Q3) einen Strom-Bypass bereitzustellen.

4. Stromregler nach Anspruch 3, wobei, wenn das Schaltelement (D3) in Betrieb ist, das zweite Schaltelement (D3) dem Strom begrenzenden ersten Schaltelement (Q2, Q3) einen Strom-Bypass bereitstellt, und dadurch die Grenze überbrückt, die vom Strom begrenzenden ersten Schaltelement (Q2, Q3) eingestellt wurde und ermöglicht, dass mehr Strom durch den Linearregler (Q1, D4, R2) fließt.

5. Stromregler nach einem der Ansprüche 1 bis 4, wobei das zweite Schaltelement (D3) eine Zenerdiode einschließt, die eingerichtet ist, als der Bypass zu arbeiten, wenn der vorbestimmte Betrag gleich oder größer als die Durchschlagspannung in Sperrrichtung der Zenerdiode ist.

6. Stromregler nach einem der vorhergehenden Ansprüche, wobei das erste Schaltelement (Q2, Q3) ein Darlington-Paar einschließt.

7. Stromregler nach Anspruch 6, wobei die Basis des Darlington-Paares eingerichtet ist, mit dem gleichgerichteten Wechselstromsignal (vin) versorgt zu werden.

8. Stromregler nach einem vorhergehenden Anspruch, wobei die Basis eingerichtet ist, mit dem gleichgerichteten Wechselstromsignal (vin) ab einem Spannungsteiler versorgt zu werden.

9. Stromregler nach einem der vorhergehenden Ansprüche, wobei:
Der Stromregler ferner einen Glättungskondensator einschließt, der mit dem Ausgang (vout) des Schaltmittels verbunden ist; und/oder
die zweite Referenzspannung vom ersten Signal (vs) abgeleitet ist.

10. Stromregler nach einem der vorhergehenden Ansprüche, wobei der Ausgang des Schaltmittels (Q2, D3) mit einem Tiefsetzsteller verbunden ist.

11. Stromregler nach einem der vorhergehenden Ansprüche, wobei der Ausgang des Schaltelements (Q2, D3) mit einem weiteren Linearregler verbunden ist.

12. Schutzschalter, der einen Stromregler nach einem der vorhergehenden Ansprüche einschließt.

13. Integrierte Schaltung mit einem Stromregler nach einem der vorhergehenden Ansprüche.

## Revendications

1. Régulateur de puissance, comprenant :
un redresseur pleine-onde (D2) pour fournir un signal CA redressé (vin) ;
un régulateur linéaire (Q1, D4, R2) ayant une entrée (vd) connectée au redresseur pleine-onde, le régulateur linéaire étant configuré pour émettre un premier signal (vs) obtenu à partir du signal CA redressé ; et
un moyen de commutation (Q2, D3) ayant une entrée connectée à la sortie (vs) du régulateur linéaire et ayant une sortie (vout), le moyen de commutation (Q2, D3) comprenant des premier et second éléments de commutation (Q2, Q3 ; D3) respectivement connectés chacun entre l'entrée et la sortie du moyen de commutation,
le fonctionnement du premier élément de commutation (Q2, Q3) étant déterminé par une première différence entre une valeur de tension associée au signal CA redressé (vin) et une première valeur de tension de référence, et
le fonctionnement du second élément de commutation (D3) étant déterminé par une seconde différence entre la valeur de tension au niveau de la sortie (vout) du moyen de commutation et une seconde valeur de tension de référence ;
le second élément de commutation (D3) fonctionnant, quand ladite seconde différence étant supérieure ou égale à une valeur prédéterminée, pour fournir une dérivation de courant au premier élément de commutation (Q2, Q3), le premier élément de commutation (Q2, Q3) comprenant un transistor (Q3) et la base du transistor étant agencée pour être alimentée avec le signal CA redressé (vin).

2. Régulateur de puissance selon la revendication 1, dans lequel, quand ladite seconde différence est inférieure à ladite valeur prédéterminée, le second élément de commutation (D3) ne fonctionne pas pour fournir ladite dérivation de courant, et le premier élément de commutation (Q2, Q3) permet de limiter le courant circulant dans le régulateur linéaire (Q1, D4, R2).

3. Régulateur de puissance selon la revendication 1 ou 2, dans lequel, quand la valeur de tension à la sortie du moyen de commutation est inférieure ou égale à la seconde valeur de tension de référence de plus de ladite valeur prédéterminée, le second élément de commutation (D3) fonctionne pour fournir une dérivation de courant au premier élément de commutation (Q2, Q3).

4. Régulateur de puissance selon la revendication 3, dans lequel, quand le second élément de commutation (D3) est en fonctionnement, le second élément de commutation (D3) fournir une dérivation de courant au premier élément de commutation (Q2, Q3) de limitation de courant, de manière à remplacer la limite définie par le premier élément de commutation (Q2, Q3) de limitation de courant et à permettre à davantage de courant de circuler dans ledit régulateur linéaire (Q1, D4, R2).

5. Régulateur de puissance selon l'une quelconque des revendications 1 à 4, dans lequel le second élément de commutation (D3) comprend une diode Zener, agencée pour fonctionner en guise de ladite dérivation quand ladite valeur prédéterminée est supérieure ou égale à la tension de claquage inverse de la diode Zener.

6. Régulateur de puissance selon l'une quelconque des revendications précédentes, dans lequel le premier élément de commutation (Q2, Q3) comprend une paire de Darlington.

7. Régulateur de puissance selon la revendication 6, dans lequel la base de la paire de Darlington est agencée pour être alimentée avec le signal CA redressé (vin).

8. Régulateur de puissance selon l'une quelconque des revendications précédentes, dans lequel la base est agencée pour être alimentée avec le signal CA redressé (vin) par un diviseur de tension.

9. Régulateur de puissance selon l'une quelconque des revendications précédentes, dans lequel :
le régulateur de puissance comprend en outre un condensateur de filtrage connecté à la sortie (vout) du moyen de commutation ; et/ou
la seconde valeur de tension de référence est obtenue à partir du premier signal (vs).

10. Régulateur de puissance selon l'une quelconque des revendications précédentes, dans lequel la sortie du moyen de commutation (Q2, D3) est connectée à un convertisseur abaisseur de tension.

11. Régulateur de puissance selon l'une quelconque des revendications précédentes, dans lequel la sortie du moyen de commutation (Q2, D3) est connectée à un autre régulateur linéaire.

12. Dispositif de protection de circuit comprenant un régulateur de puissance selon l'une quelconque des revendications précédentes.

13. Circuit intégré comportant un régulateur de puissance selon l'une quelconque des revendications précédentes.
